# EUROPÄISCHE PATENTSCHRIFT

(11) **EP 2 961 783 B1**
(45) Veröffentlichungstag und Bekanntmachung des Hinweises auf die Patenterteilung: **03.10.2018**
(21) Anmeldenummer: 14706311.9
(22) Anmeldetag: 25.02.2014
(51) Int. Cl.: C08G 18/48, C08G 18/75, C08G 18/10, C08G 59/50

(54) **ZWEIKOMPONENTIGE ZUSAMMENSETZUNG**
DUAL COMPONENT COMPOUND
COMPOSITION À DEUX COMPOSANTS

(30) Priorität: 26.02.2013 EP 13156733
(43) Veröffentlichungstag der Anmeldung: 06.01.2016
(73) Patentinhaber: Sika Technology AG, 6340 Baar (CH)
(72) Erfinder: KELCH, Steffen, CH-8102 Oberengstringen (CH); BURCKHARDT, Urs, CH-8049 Zürich (CH)
(74) Vertreter: Sika Patent Attorneys
(86) Internationale Anmeldenummer: PCT/EP2014/053628
(87) Internationale Veröffentlichungsnummer: WO 2014/131757

(56) Entgegenhaltungen:
- EP-A1- 1 544 230
- EP-A1- 1 717 240

## Beschreibung

### Technisches Gebiet

Die Erfindung betrifft bei Raumtemperatur härtbare zweikomponentige Zusammensetzungen auf Basis silanfunktioneller Polymere, sowie deren Verwendungen, insbesondere als Klebstoff, Dichtstoff oder Beschichtung.

### Stand der Technik

Härtbare Massen auf Basis von silanfunktionellen Polymeren sind bekannt. Sie zeichnen sich durch eine blasenfreie Aushärtung sowie durch hohe Haftkräfte aus. Die meisten der bekannten Zusammensetzungen dieser Art werden als einkomponentige Zusammensetzungen formuliert, welche mit Luftfeuchtigkeit aushärten. Diese Systeme härten relativ langsam aus und sind bezüglich maximal erreichbarer Festigkeit limitiert. Oft weisen sie eine relativ geringe Weiterreissfestigkeit auf, sind also recht spröde. Ausserdem sind sie thermisch relativ unbeständig.

Kombinationen von silanfunktionellen Polymeren mit Epoxidharzen sind bekannt, beispielsweise aus EP 0 186 191. Es handelt sich meist um zweikomponentige Systeme, in denen typischerweise das silanfunktionelle Polymer in der einen Komponente und das Epoxidharz in der andern Komponente vorliegen. Solche Systeme weisen wesentlich höhere Festigkeiten und Zähelastizität auf. Bei der Applikation ist aber meist ein ausgeprägter, unangenehmer Amingeruch wahrnehmbar. Zudem neigen die Amine dazu, mit Kohlendioxid (CO₂) aus der Luft Salze zu bilden, insbesondere bei hoher Luftfeuchtigkeit und tiefen Temperaturen, was eine langsame oder unvollständige Aushärtung mit vermindertem Festigkeitaufbau zur Folge haben kann.

Aus EP 1 090 960 sind zweikomponentige Systeme bekannt, bei welchen ein silanfunktionelles Polymer und ein Epoxidharz in der einen Komponente vorliegen, während die andere Komponente unter anderem ein Silan, insbesondere ein Aminosilan, enthält. Die beschriebenen Zusammensetzungen weisen eine lange Gelierzeit (surface curing time) auf.

EP 1 544 230 offenbart zweikomponentige, wasserbasierte Härter für Epoxidharze umfassend in einer ersten Komponente eine amin-funktionelle Dispersion und in einer zweiten Komponente einen amin-funktionellen Härter. Silanfunktionelle Polymere werden nicht gelehrt.

EP 1 717 240 lehrt Organoalkoxysilane enthaltend eine Harnstoff-, Thioharnstoff-, Carbamat- oder Thiocarbamatgruppe sowie deren Verwendung in Zusammensetzungen auf Basis silanfunktioneller Polymere zur Verbesserung der mechanischen Eigenschaften. Epoxidharze und wässrige Härter werden nicht gelehrt.

### Darstellung der Erfindung

Aufgabe der vorliegenden Erfindung ist es, die Nachteile des Stands der Technik zu überwinden und somit eine Zusammensetzung auf Basis silanfunktioneller Polymere bereitzustellen, welche ohne ausgeprägten Amingeruch appliziert werden kann, schnell, unabhängig von der herrschenden Luftfeuchtigkeit und ohne eine klebrige Oberfläche zu hinterlassen aushärtet und im ausgehärteten Zustand über eine hohe Festigkeit und Zähelastizität, gute Haftung auf verschiedenartigen Substraten sowie eine hohe thermische Beständigkeit verfügt. Weiterhin soll die Zusammensetzung vor der Applikation eine gute Lagerstabilität aufweisen und die beiden Komponenten gut mischbar und dann gut applizierbar sein, insbesondere bei Raumtemperatur.

Überraschenderweise wurde gefunden, dass eine zweikomponentige Zusammensetzung gemäss Anspruch 1 diese Aufgabe sehr gut löst. Die Komponente **A** umfasst mindestens ein silanfunktionelles Polymer und mindestens ein Epoxidharz. Die Komponente **B** umfasst Wasser und mindestens ein Amin-Epoxid-Addukt. Beide Komponenten sind jede für sich hervorragend lagerstabil. Das Amin-Epoxid-Addukt weist nur einen sehr moderaten oder gar keinen Amingeruch auf, wodurch die Zusammensetzung praktisch geruchsfrei verarbeitet werden kann, was für den Verarbeiter einen grossen Vorteil darstellt. Beim Vermischen der beiden Komponenten treten überraschenderweise keinerlei Verträglichkeitsprobleme auf, insbesondere auch dann, wenn die Komponente **B** erhebliche Anteile an Wasser enthält. Die Komponenten können mit einfachen Mischern sehr gut vermischt werden, wobei eine optisch homogene, gut applizierbare Masse entsteht, welche rasch Festigkeit aufbaut und unabhängig von den klimatischen Bedingungen, insbesondere unabhängig von der herrschenden Luftfeuchtigkeit, aushärtet. Die ausgehärtete Zusammensetzung verfügt typischerweise über eine nichtklebrige, ebenmässige Oberfläche, ist frei von Blasen und weist ausgezeichnete mechanische Eigenschaften auf, insbesondere eine hohe Festigkeit und Zähelastizität und ein hohes Rückstellvermögen. Sie verfügt über eine gute Haftung zu verschiedensten Substraten und eine hohe Beständigkeit gegenüber thermischer und hydrolytischer Belastung. Durch Variation des Epoxidharz-Gehaltes lassen sich die mechanischen Eigenschaften der Zusammensetzung in einem breiten Bereich variieren, ohne dass Unverträglichkeiten beobachtet werden. Die vermischte bzw. ausgehärtete Zusammensetzung verfügt auch beim Vorhandensein von erheblichen Mengen an Wasser überraschenderweise nur über einen geringen, nicht funktionskritischen Schwund. Das Mischungsverhältnis der beiden Komponenten kann in einem weiten Bereich variieren, wobei über die eindosierte Menge der Komponente **B** auch die Vernetzungsdichte des Epoxidharzes eingestellt werden kann.

Dass die Kombination aus den beiden Komponenten zu so guten Materialien führt, war aus dem Stand der Technik nicht abzuleiten. Weder die Verwendung von Amin-Epoxid-Addukten noch die Verwendung von wässrigen Härtern sind im Stand der Technik zur Aushärtung einer Mischung aus silanfunktionellem Polymer und Epoxidharz ausgeführt. Überraschend wurde gefunden, dass der Einsatz von Amin-Epoxid-Addukten gegenüber unadduktierten Polyaminen ein schnelleres Erreichen der Endhärte ermöglicht. Weiterhin überraschend ist der Befund, dass bei der Verwendung von wässrigen Härtern deren hoher Wassergehalt, welcher ein Mehrfaches des zur Vernetzung der Silangruppen benötigten Wassers ausmachen kann, weder zu Verträglichkeitsproblemen und ungenügenden mechanischen Eigenschaften, noch zu einem merklichen Schwund führt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine zweikomponentige Zusammensetzung bestehend aus einer Komponente **A** umfassend
- mindestens ein silanfunktionelles Polymer, und
- mindestens ein Epoxidharz,
   und einer Komponente **B** umfassend
- Wasser, und
- mindestens ein Amin-Epoxid-Addukt, welches mindestens drei Aminwasserstoffe aufweist.

Der Begriff "Silangruppe" bezeichnet eine an einen organischen Rest gebundene Silylgruppe mit einer bis drei, insbesondere zwei oder drei, hydrolysierbaren Alkoxygruppe(n) am Silicium-Atom, d.h. eine Alkoxysilylgruppe. Als "Silan" wird entsprechend eine Verbindung bezeichnet, welche mindestens eine Silangruppe trägt. Der Begriff "silanfunktionelles Polymer" bezeichnet ein Polymer, welches mindestens eine Silangruppe trägt, wobei unter "Polymer" auch Oligomere und Prepolymere zu verstehen sind.

Als "Aminosilan", "Hydroxysilan", "Isocyanatosilan" usw. werden Silane bezeichnet, welche am organischen Rest eine entsprechende funktionelle Gruppe tragen, also eine Aminogruppe, Hydroxylgruppe, Isocyanatgruppe usw. Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Mit "Poly" beginnende Substanznamen wie Polyol, Polyamin oder Polyisocyanat bezeichnen Substanzen, die formal zwei oder mehr der in ihrem Namen vorkommenden funktionellen Gruppen pro Molekül enthalten.

Als "Aminwasserstoff" werden die Wasserstoffatome von primären und sekundären Aminogruppen bezeichnet.

Als "Aminwasserstoff-Equivalentgewicht" wird der Gewichtsanteil eines Härters oder eines Amins pro im Härter oder im Amin vorhandenen Aminwasserstoff bezeichnet.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.
Als "Raumtemperatur" wird im vorliegenden Dokument eine Temperatur von 23 °C bezeichnet.

Die Komponente **A** der erfindungsgemässen Zusammensetzung umfasst mindestens ein silanfunktionelles Polymer.
Bevorzugt weist das silanfunktionelle Polymer ein mittleres Molekulargewicht im Bereich von 1'000 bis 30'000 g/mol, bevorzugt 2'000 bis 25'000 g/mol, besonders bevorzugt 3'000 bis 20'000 g/mol, und insbesondere von 4'000 bis 15'000 g/mol, auf. Ein solches Polymer ermöglicht hohe Festigkeiten bei hoher Dehnbarkeit.
Bevorzugt weist das silanfunktionelle Polymer mehrheitlich Polyoxyalkyleneinheiten, besonders bevorzugt Polyoxyethylen- und/oder Polyoxypropyleneinheiten, insbesondere Polyoxypropyleneinheiten, auf. Ein solches Polymer weist eine besonders tiefe Viskosität auf und ermöglicht besonders gute Dehnbarkeiten.
Bevorzugt weist das silanfunktionelle Polymer mindestens eine, insbesondere mindestens zwei, Endgruppen der Formel (I) auf.

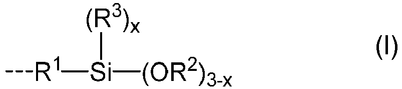

Dabei steht der Rest R¹ für einen linearen oder verzweigten Alkylen- oder Cycloalkylenrest mit 1 bis 12 C-Atomen, gegebenenfalls mit aromatischen Anteilen, und gegebenenfalls mit einem oder mehreren Heteroatomen, insbesondere einem oder mehreren Stickstoffatomen.
Insbesondere steht R¹ für einen linearen oder verzweigten Alkylenrest mit 1 bis 6 C-Atomen, bevorzugt für Methylen oder 1,3-Propylen, besonders bevorzugt für 1,3-Propylen.
Der Rest R² steht für einen Acyl- oder Alkylrest mit 1 bis 10 C-Atomen, welcher gegebenenfalls eine oder mehrere Ether-Sauerstoffe aufweist. Insbesondere steht R² für Methyl oder Ethyl oder Isopropyl oder Hept-3,6-dioxa-1-yl, bevorzugt für Methyl oder Ethyl.
Der Rest R³ steht für einen Alkylrest mit 1 bis 6 C-Atomen, insbesondere für Methyl.
Der Index x steht für einen Wert von 0 oder 1 oder 2, insbesondere für 0.

Ein solches silanfunktionelles Polymer ist sehr gut lagerstabil, hydrolysiert bei Kontakt mit Feuchtigkeit schnell und ermöglicht gute mechanische Eigenschaften, insbesondere eine hohe Festigkeit bei hoher Dehnbarkeit.

Innerhalb einer Silangruppe der Formel (I) stehen R² und R³ jeweils unabhängig voneinander für die beschriebenen Reste. So sind beispielsweise auch silanfunktionelle Polymere mit Endgruppen der Formel (I) möglich, welche Ethoxydimethoxysilan-Endgruppen (R² = Methyl, R² =Methyl, R² = Ethyl) aufweisen.

Die Endgruppen der Formel (I) sind insbesondere mehrheitlich an cycloaliphatische Reste gebunden. Ein solches Polymer weist besonders tiefe Viskositäten auf und ist besonders lichtecht.

Bevorzugt weist das silanfunktionelle Polymer 1 bis 4, besonders bevorzugt 1 bis 3, insbesondere 2 oder 3, am meisten bevorzugt 2, Endgruppen der Formel (I) auf. Ein solches Polymer ermöglicht gute mechanische Eigenschaften, insbesondere eine hohe Dehnbarkeit.

Bevorzugt ist das silanfunktionelle Polymer frei von Isocyanatgruppen. Ein solches silanfunktionelles Polymer ist toxikologisch vorteilhaft.

Als silanfunktionelles Polymer geeignet ist in einer ersten Ausführungsform ein silanfunktionelles Polymer **P1,** welches erhältlich ist durch die Umsetzung eines Isocyanatgruppen aufweisenden Polyurethanpolymers mit mindestens einem Silan, welches mindestens eine gegenüber Isocyanatgruppen reaktive Gruppe aufweist.

Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polymer **P1** frei von Isocyanatgruppen ist. Die Umsetzung wird bevorzugt bei einer Temperatur im Bereich von 20 °C bis 120 °C, insbesondere 50 °C bis 100 °C, durchgeführt, gegebenenfalls in Anwesenheit von mindestens einem Katalysator.

Das Silan, welches mindestens eine gegenüber Isocyanatgruppen reaktive Gruppe aufweist, kann prinzipiell, wenn auch nicht bevorzugt, auch in einer unterstöchiometrischen Menge gegenüber den Isocyanatgruppen des Polyurethanpolymers eingesetzt werden, wobei ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist insbesondere ein Mercaptosilan, ein Hydroxysilan oder ein Aminosilan, bevorzugt ein Aminosilan.

Geeignete Aminosilane sind einerseits primäre Aminosilane, insbesondere 3-Aminopropyltrimethoxysilan und 3-Aminopropyldimethoxymethylsilan, sowie weiterhin sekundäre Aminosilane, insbesondere 3-(n-Butylamino)propyl-trimethoxysilan, 3-(Phenylamino)propyl-trimethoxysilan, Bis(trimethoxysilylpropyl)-amin, die Produkte aus der Michael-artigen Addition von primären Aminosilanen, insbesondere 3-Aminopropyltrimethoxysilan und 3-Aminopropyldimethoxymethylsilan, an Michael-Akzeptoren wie Acrylnitril, (Meth)acrylsäureester, (Meth)acrylsäureamide, Maleinsäureester und Maleinsäureamide, Fumarsäurediester, Citraconsäurediester und Itaconsäurediester; sowie Analoga der genannten Aminosilane mit Ethoxygruppen anstelle der Methoxygruppen am Silicium.

Bevorzugt zur Herstellung eines silanfunktionellen Polymers **P1** sind sekundäre Aminosilane.

Besonders bevorzugt sind die Produkte aus der Michael-artigen Addition, insbesondere mit Acrylaten wie n-Butylacrylat, 2-Ethylhexylacrylat, Laurylacrylat oder Isobornylacrylat, und insbesondere mit Maleinsäuredialkylestern. Insbesondere bevorzugt sind die Produkte aus der Michael-artigen Addition von 3-Aminopropyltrimethoxysilan, 3-Aminopropyltriethoxysilan, 3-Aminopropyldimethoxymethylsilan und 3-Aminopropyldiethoxymethylsilan mit Maleinsäuredialkylestern, insbesondere mit Maleinsäurediethylester.
Am meisten bevorzugt ist N-(3-Trimethoxysilyl-propyl)-amino-bernsteinsäurediethylester.
Mit diesen Aminosilanen sind silanfunktionelle Polymere **P1** zugänglich, die besonders hohe Dehnbarkeiten ermöglichen.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen in einer der Michael-Addition analogen Weise nucleophile Additionsreaktionen einzugehen (Hetero-Michael-Addition).

Ein geeignetes Isocyanatgruppen aufweisendes Polyurethanpolymer zur Herstellung eines silanfunktionellen Polymers **P1** ist insbesondere erhältlich durch Umsetzung von mindestens einem Polyol mit mindestens einem Polyisocyanat, insbesondere mindestens einem Diisocyanat.
Diese Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach Umsetzung aller Hydroxylgruppen ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt. Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5 bis 2.2, insbesondere 1.8 bis 2.0, erhalten werden. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Als Polyol für die Herstellung eines Isocyanatgruppen-haltigen Polyurethanpolymers geeignet sind insbesondere die folgenden handelsüblichen Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Bevorzugt sind Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren).
   Besonders geeignet sind Polyoxyalkylendiole oder Polyoxyalkylentriole, insbesondere Polyoxyethylen- und Polyoxypropylendi- und -triole. Weiterhin besonders geeignet sind sogenannte Ethylenoxid-terminierte (EOendcapped) Polyoxypropylenpolyole. Letztere sind Polyoxyethylen-polyoxypropylen-Mischpolyole, die beispielsweise dadurch erhalten werden, dass Polyoxypropylenpolyole nach Abschluss der Polypropoxylierungsreaktion mit Ethylenoxid weiter alkoxyliert werden und dadurch primäre Hydroxylgruppen aufweisen.
   - Styrol-Acrylnitril- oder Acrylnitril-Methylmethacrylat-gepfropfte Polyetherpolyole.
   - Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyoxyalkylenpolyole, Polyesterpolyole, Polycarbonatpolyole und Polyacrylatpolyole. Besonders bevorzugt sind Polyoxyalkylenpolyole.
Bevorzugte Polyoxyalkylenpolyole sind Polyoxypropylenpolyole und Polyoxyethylen-polyoxypropylen-Mischpolyole.
Das Polyol weist bevorzugt ein mittleres Molekulargewicht im Bereich von 1'000 bis 20'000 g/mol, besonders bevorzugt 2'000 bis 15'000 g/mol, auf. Das Polyol ist bevorzugt ein Diol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Als Polyisocyanat für die Herstellung eines Isocyanatgruppen aufweisenden Polyurethanpolymers geeignet sind insbesondere die folgenden handelsüblichen Polyisocyanate oder beliebige Mischungen davon:
Aliphatische Isocyanate wie insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat, sowie weiterhin aromatische Isocyanate wie insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat, sowie Oligomere und Polymere der vorgenannten Isocyanate, sowie beliebige Mischungen der vorgenannten Isocyanate.
Bevorzugte Polyisocyanate sind Diisocyanate. Besonders bevorzugt sind IPDI, HDI, MDI und TDI, insbesondere IPDI. Auf der Basis von IPDI sind silanfunktionelle Polymere **P1** erhältlich, welche eine niedrige Viskosität aufweisen und gute mechanische Eigenschaften und eine geringe Vergilbungsneigung unter Lichteinfluss ermöglichen.

Beispielsweise sind geeignete silanfunktionelle Polymere **P1** kommerziell erhältlich unter dem Handelsnamen Polymer ST von der Firma Hanse Chemie AG, Deutschland, beispielsweise als Polymer ST50, sowie unter dem Handelsnamen Desmoseal® von der Firma Bayer MaterialScience AG, Deutschland.

Als silanfunktionelles Polymer geeignet ist in einer weiteren Ausführungsform ein silanfunktionelles Polymer **P2,** welches erhältlich ist durch die Umsetzung eines Polymers mit gegenüber Isocyanatgruppen reaktiven funktionellen Endgruppen, insbesondere Hydroxylgruppen, Mercaptogruppen und/oder Aminogruppen, mit mindestens einem Isocyanatosilan. Diese Umsetzung erfolgt bevorzugt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, so dass das resultierende silanfunktionelle Polymer **P2** frei von Isocyanatgruppen ist. Die Umsetzung wird bevorzugt bei einer Temperatur im Bereich von 20 °C bis 120 °C, insbesondere 50 °C bis 100 °C, durchgeführt, gegebenenfalls in Anwesenheit von mindestens einem geeigneten Katalysator.

Als Isocyanatosilan geeignet sind insbesondere Isocyanatomethyltrimethoxysilan, Isocyanatomethyldimethoxymethylsilan, 3-Isocyanatopropyltrimethoxysilan, 3-Isocyanatopropyldimethoxymethylsilan; sowie deren Analoga mit Ethoxygruppen anstelle der Methoxygruppen am Silicium.

Das Polymer mit gegenüber Isocyanatgruppen reaktiven funktionellen Endgruppen weist als gegenüber Isocyanatgruppen reaktive funktionelle Endgruppen bevorzugt Hydroxylgruppen auf.
Als Hydroxylgruppen aufweisendes Polymer eignen sich die bereits genannten Polyole, bevorzugt hochmolekulare Polyoxyalkylenpolyole, insbesondere Polyoxypropylendiole mit einem Ungesättigtheitsgrad tiefer als 0.02 mEq/g und einem mittleren Molekulargewicht im Bereich von 2'000 bis 20'000 g/mol, insbesondere 4'000 bis 15'000 g/mol.
Als Hydroxylgruppen aufweisendes Polymer eignen sich weiterhin Polyurethanpolymere mit Hydroxylendgruppen. Diese sind ähnlich wie die vorgängig beschriebenen Isocyanatgruppen aufweisenden Polyurethanpolymere erhältlich durch die Umsetzung von mindestens einem Polyisocyanat mit mindestens einem Polyol, wobei aber das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.
Für diese Umsetzung geeignet sind dieselben Polyole und Polyisocyanate, die bereits als geeignet zur Herstellung eines Isocyanatgruppen aufweisenden Polyurethanpolymers erwähnt wurden.

Beispielsweise sind geeignete silanfunktionelle Polymere **P2** kommerziell erhältlich unter den Handelsnamen SPUR+® 1010LM, 1015LM und 1050MM von der Firma Momentive, USA, sowie unter den Handelsnamen Geniosil® STP-E10, STP-E15, STP-E30 und STP-E35 von der Firma Wacker Chemie AG, Deutschland.

Als silanfunktionelles Polymer geeignet ist in einer weiteren Ausführungsform ein silanfunktionelles Polymer **P3,** welches erhältlich ist durch eine Hydrosilylierungsreaktion von Polymeren mit endständigen Doppelbindungen, insbesondere von Poly(meth)acrylatpolymeren und allylterminierten Polyetherpolymeren, beschrieben beispielsweise in US 3,971,751 und US 6,207,766, deren gesamte Offenbarung hiermit eingeschlossen ist.
Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

Als silanfunktionelles Polymer bevorzugt sind silanfunktionelle Polymere **P1.** Damit werden eine besonders schnelle Aushärtung und besonders gute mechanische Festigkeiten erreicht.

Das silanfunktionelle Polymer ist in der gesamten Zusammensetzung bevorzugt in einer Menge von 10 bis 85 Gew.-%, besonders bevorzugt 20 bis 80 Gew.-%, insbesondere 30 bis 75 Gew.-%, vorhanden.

Die Komponente **A** der erfindungsgemässen Zusammensetzung umfasst weiterhin mindestens ein Epoxidharz.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- und 2,2'-Hydroxyphenylmethan.
- Dihydroxybenzol-Derivaten wie Resorcin, Hydrochinon und Brenzkatechin;
- weiteren Bisphenolen oder Polyphenolen wie Bis-(4-hydroxy-3-methylphenyl)methan, 2,2-Bis-(4-hydroxy-3-methylyphenyl)propan (Bisphenol-C), Bis-(3,5-dimethyl-4-hydroxyphenyl)methan, 2,2-Bis-(3,5-dimethyl-4-hydroxyphenyl)propan, 2,2-Bis-(3,5-dibromo-4-hydroxyphenyl)propan, 2,2-Bis-(4-hydroxy-3-tert.butylphenyl)propan, 2,2-Bis-(4-hydroxyphenyl)butan (Bisphenol-B), 3,3-Bis-(4-hydroxyphenyl)pentan, 3,4-Bis-(4-hydroxyphenyl)hexan, 4,4-Bis-(4-hydroxyphenyl)heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis-[2-(4-hydroxyphenyl)-2-propyl]benzol (Bisphenol-P), 1,3-Bis-[2-(4-hydroxyphenyl)-2-propyl]benzol (Bisphenol-M), 4,4'-Dihydroxydiphenyl (DOD), 4,4'-Dihydroxybenzophenon, Bis-(2-hydroxynaphth-1-yl)methan, Bis-(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis-(4-hydroxyphenyl)ether und Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P), 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether eines gesättigten oder ungesättigten, verzweigten oder unverzweigten, zyklischen oder offenkettigen C₂- bis C₃₀-Diols, insbesondere Ethylenglykol, Propylenglykol, Butylenglykol, Hexandiol, Octandiol, Polypropylenglykol, Dimethylolcyclohexan, Neopentylglykol oder Dibromo-neopentylglykol;
- Glycidylether eines tri- oder tetrafunktionellen, gesättigten oder ungesättigten, verzweigten oder unverzweigten, zyklischen oder offenkettigen Polyols, insbesondere Rizinusöl, Trimethylolpropan, Trimethylolethan, Pentaerythrol, Sorbit oder Glycerin, sowie alkoxyliertes Glycerin oder alkoxyliertes Trimethylolpropan;
- hydrierte Bisphenol-A-, -F- oder -A/F-Flüssigharze, beziehungsweise die Glycidylisierungsprodukte von hydriertem Bisphenol-A, -F oder -A/F;
- N-Glycidylderivate von Amiden oder heterocyclischen Stickstoffbasen, wie Triglycidylcyanurat und Triglycidylisocyanurat, sowie Umsetzungsprodukte von Epichlorhydrin und Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz besonders bevorzugt sind Bisphenol A-, Bisphenol F- oder Bisphenol A/F-Diglycidyl-Flüssigharze, wie sie kommerziell beispielsweise von Dow, Huntsman und Momentive erhältlich sind. Diese Flüssigharze weisen eine für Epoxidharze niedrige Viskosität und im ausgehärteten Zustand hohe Festigkeiten auf. Sie können gegebenenfalls in Kombination mit weiteren Epoxidharzen vorhanden sein.

Das Epoxidharz kann anteilig auch monofunktionelle Epoxide, sogenannte Reaktivverdünner,enthalten, wie insbesondere Phenylglycidylether, Kresylglycidylether, Benzylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether.

Das Verhältnis zwischen dem silanfunktionellen Polymer und dem Epoxidharz lässt sich in einem breiten Bereich variieren. Ein hoher Anteil an silanfunktionellem Polymer ergibt Zusammensetzungen mit einer besonders hohen Dehnbarkeit, während ein hoher Anteil an Epoxidharz Zusammensetzungen mit besonders hohen Festigkeiten ergibt.

Bevorzugt liegt das Gewichtsverhältnis zwischen dem silanfunktionellen Polymer und dem Epoxidharz im Bereich von 10:1 bis 1:3.
Insbesondere liegt das Gewichtsverhältnis zwischen dem silanfunktionellen Polymer und dem Epoxidharz im Bereich von 8:1 bis 1:2, besonders bevorzugt 5:1 bis 1:1. Eine solche Zusammensetzung ermöglicht sehr hohe Dehnbarkeiten bei hoher Festigkeit und weist ausgeprägt elastische Eigenschaften mit hervorragendem Rückstellvermögen auf.

Die Komponente **B** der erfindungsgemässen Zusammensetzung umfasst mindestens ein Amin-Epoxid-Addukt, welches mindestens 3 Aminwasserstoffe aufweist.

Das Amin-Epoxid-Addukt ist insbesondere erhältlich aus der Umsetzung von mindestens einem Polyamin und mindestens einem Epoxid, insbesondere einem Mono- oder Diepoxid. Dabei wird als "Amin-Epoxid-Addukt" das Produkt aus dieser Umsetzung ohne weitere Aufarbeitung bezeichnet, wobei dieses Produkt typischerweise Anteile von nicht umgesetztem Polyamin enthält.
Das Amin-Epoxid-Addukt wird bevorzugt hergestellt, indem das Polyamin mit dem Epoxid vermischt und bei einer Temperatur im Bereich von 20 bis 150 °C, bevorzugt 50 bis 100 °C, zur Reaktion gebracht werden.
Dabei werden das Polyamin und das Epoxid in einer solchen Menge eingesetzt, dass die Aminogruppen gegenüber den Epoxidgruppen im Überschuss vorliegen.
Für den Fall, dass als Epoxid ein Monoepoxid verwendet wird, ist das Amin-Epoxid-Addukt insbesondere erhältlich durch Umsetzung des Polyamins und des Monoepoxids in einem Molverhältnis im Bereich von 1/0.8 bis 1/1.5, insbesondere 1/0.9 bis 1/1.2.
Für den Fall, dass als Epoxid ein Diepoxid verwendet wird, ist das Amin-Epoxid-Addukt insbesondere erhältlich durch Umsetzung des Polyamins und des Diepoxids in einem Molverhältnis im Bereich von 2/0.8 bis 2/1.2, insbesondere 2/0.9 bis 2/1.1.

In einer bevorzugten Ausführungsform der Erfindung ist das Amin-Epoxid-Addukt ein Umsetzungsprodukt aus mindestens einem Polyamin und mindestens einem Monoepoxid.

Als Polyamin geeignet sind dafür insbesondere Polyamine mit zwei primären Aminogruppen, insbesondere die folgenden:
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (= Isophorondiamin oder IPD), 2- und 4-Methyl-1,3-diaminocyclohexan und Mischungen davon, 1,3- und 1,4-Bis(aminomethyl)cyclohexan, 2,5(2,6)-Bis(aminomethyl)bicyclo[2.2.1]heptan (NBDA), 3(4), 8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan sowie 1,3- und 1,4-Bis(aminomethyl)-benzol;
- sekundäre Aminogruppen aufweisende Polyamine mit zwei primären aliphatischen Aminogruppen, insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylene polyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin und N,N'-Bis(3-amino-1-ethylpropyl)-2-methyl-1,5-pentandiamin;
- tertiäre Aminogruppen aufweisende Polyamine mit zwei primären aliphatischen Aminogruppen, insbesondere N,N'-Bis(aminopropyl)-piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis(3-aminopropyl)dodecylamin und N,N-Bis(3-aminopropyl)talgalkylamin, erhältlich als Triameen® Y12D und Triameen® YT (von Akzo Nobel);
- Ethergruppen-haltige aliphatische primäre Diamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis(3-aminopropyl)polytetrahydrofurane und andere Polytetrahydrofurandiamine, cycloaliphatische ethergruppenhaltige Diamine aus der Propoxylierung und nachfolgenden Aminierung von 1,4-Dimethylolcyclohexan, erhältlich insbesondere als Jeffamine® RFD-270 (von Huntsman), sowie Polyoxyalkylendiamine, welche typischerweise Produkte aus der Aminierung von Polyoxyalkylendiolen darstellen und beispielsweise erhältlich sind unter dem Namen Jeffamine® (von Huntsman), unter dem Namen Polyetheramine (von BASF) oder unter dem Namen PC Amine® (von Nitroil). Insbesondere geeignete Polyoxypropylendiamine sind Jeffamine® D-230, Jeffamine® D-400, Jeffamine® D-2000, Jeffamine® EDR-104, Jeffamine® EDR-148 und Jeffamine® EDR-176, sowie entsprechende Amine von BASF oder Nitroil, und insbesondere geeignete Polyoxyethylendiamine sind Jeffamine® ED-600, Jeffamine® ED-900 und Jeffamine® ED-2003.

Besonders bevorzugt sind 1,5-Diamino-2-methylpentan, 2,2,4- und 2,4,4-Trimethylhexamethylendiamin, Diethylentriamin und Polyoxypropylendiamine mit einem mittleren Molekulargewicht im Bereich von 200 bis 300 g/mol.

Als Monoepoxid bevorzugt ist ein aromatisches Monoepoxid, insbesondere der Glycidylether eines Phenols, insbesondere der Glycidylether von Phenol, Kresol, tert.Butylphenol oder Cardanol.
Als Monoepoxid besonders bevorzugt ist Kresylglycidylether. Als Kresylglycidylether geeignet sind alle isomeren Kresylglycidylether und Gemische davon, insbesondere kommerziell erhältliche Typen wie insbesondere Araldite® DY-K (von Huntsman), Polypox™ R6 (von Dow), Heloxy™ KR (von Momentive) oder Erisys® GE-10 (von Emerald Performance Materials). Ein solches Amin-Epoxid-Addukt ist vergleichsweise niedrigviskos und weist eine gute Verträglichkeit mit der Komponente **A** auf.

Ein besonders bevorzugtes Amin-Epoxid-Addukt ist das Umsetzungsprodukt von 1,5-Diamino-2-methylpentan oder einer Mischung aus 2,2,4- und 2,4,4-Trimethylhexamethylendiamin mit Kresylglycidylether im Molverhältnis 1/0.8 bis 1/1.5, insbesondere 1/0.9 bis 1/1.2.

In einer weiteren bevorzugten Ausführungsform der Erfindung ist das Amin-Epoxid-Addukt ein Umsetzungsprodukt aus mindestens einem Polyamin und mindestens einem Diepoxid.
Als Diepoxid bevorzugt ist ein aromatisches Diepoxid, insbesondere ein Bisphenol A-, Bisphenol F- oder Bisphenol A/F-Diglycidyl-Flüssigharz.

Als Polyamin dafür geeignet sind insbesondere die bereits genannten Polyamine mit zwei primären Aminogruppen, sowie weiterhin Polyamine mit einer primären und einer sekundären Aminogruppe, insbesondere N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie insbesondere N-Cocoalkyl-1,3-propandiamin, erhältlich beispielsweise als Duomeen® CD (von Akzo Nobel) und weiterhin Produkte aus der partiellen reduktiven Alkylierung von primären Diaminen mit Aldehyden oder Ketonen.

Bevorzugte Polyamine zur Umsetzung mit mindestens einem Monoepoxid oder mit mindestens einem Diepoxid sind ausgewählt aus der Gruppe bestehend aus 1,5-Diamino-2-methylpentan, 2,2,4- und 2,4,4-Trimethylhexamethylendiamin, Isophorondiamin, 1,3- und 1,4-Bis(aminomethyl)cyclohexan, 1,3-Bis(aminomethyl)benzol, Diethylentriamin, Triethylentetramin, Tetraethylenpentamin, Pentaethylenhexamin, N-(2-Aminoethyl)-1,3-propandiamin (N3-Amin), N,N'-Bis(3-aminopropyl)ethylendiamin (N4-Amin), Polyoxypropylen- und Polyoxyethylendiamine mit einem mittleren Molekulargewicht im Bereich von 200 bis 3000 g/mol, insbesondere die Typen Jeffamine® D-230, Jeffamine® D-400, Jeffamine® D-2000, Jeffamine® EDR-104, Jeffamine® EDR-148, Jeffamine® EDR-176, Jeffamine® ED-600, Jeffamine® ED-900 und Jeffamine® ED-2003, sowie entsprechende Amine von BASF oder Nitroil.
Mit diesen Polyaminen wird eine besonders hohe Festigkeit und Beständigkeit erhalten.

Davon besonders bevorzugt sind 1,5-Diamino-2-methylpentan, 2,2,4- und 2,4,4-Trimethylhexamethylendiamin, Isophorondiamin, 1,3- und 1,4-Bis(aminomethyl)cyclohexan, 1,4-Bis(aminomethyl)benzol und Polyoxypropylendiamine mit einem Molekulargewicht im Bereich von 200 bis 300 g/mol, insbesondere Jeffamine® D-230 oder entsprechende Amine von BASF oder Nitroil. Mit diesen Polyaminen wird zusätzlich eine besonders trockene und ebenmässige Oberfläche erhalten.

Ganz besonders bevorzugt ist das Umsetzungsprodukt aus einem Polyoxypropylendiamin mit einem Molekulargewicht im Bereich von 200 bis 300 g/mol und einem Bisphenol A-Diglycidyl-Flüssigharz in einem Molverhältnis im Bereich von 2/0.9 bis 2/1.1.

Bevorzugt enthält die Komponente **B** mindestens soviel Wasser, wie für die Vernetzung des silanfunktionellen Polymers der Komponente **A** benötigt wird, insbesondere ein Mehrfaches davon.
Besonders bevorzugt enthält die Komponente **B** 5 bis 30, insbesondere 5 bis 25, Gewichts-% Wasser. In einem Aspekt der Erfindung enthält die Komponente **B** insbesondere mindestens 10 Gewichts-% Wasser.
Über eine solche Komponente **B** gelangt typischerweise ein mehrfaches an Wasser in die vermischte Zusammensetzung, als das silanfunktionelle Polymer zur Aushärtung benötigt. Dadurch härtet die Zusammensetzung nach dem Vermischen der beiden Komponenten unabhängig von der herrschenden Luftfeuchtigkeit rasch aus.

In einer bevorzugten Ausführungsform der Erfindung umfasst die Komponente **B** zusätzlich mindestens ein Polyamin **PA** mit mindestens zwei primären Aminogruppen, welches nicht identisch ist mit den zur Herstellung des Amin-Epoxid-Adduktes verwendeten Polyaminen. Eine solche Komponente **B** stellt insbesondere einen wässrigen Härter für Epoxidharze dar und enthält bevorzugt mindestens 10 Gewichts-%, insbesondere mindestens 15 Gewichts-%, Wasser.
Ein wässriger Härter für Epoxidharze wird auch als "wasserbasierter Härter" oder "wasserverdünnbarer Härter" für Epoxidharze bezeichnet.
Das Wasser liegt in einer solchen Komponente **B** bevorzugt in Form einer Wasser-in-ÖI oder einer Öl-in-Wasser Emulsion vor.
Eine Komponente **B** in Form eines wässrigen Härters für Epoxidharze ist überraschenderweise sehr gut mit der Komponente **A** vermischbar, ohne dass dabei Verträglichkeitsprobleme auftreten. Die beiden Komponenten können mit einfachen Mischern sehr gut vermischt werden, wobei eine optisch homogene, gut applizierbare Masse entsteht, welche rasch Festigkeit aufbaut und weitgehend unabhängig von den klimatischen Bedingungen, insbesondere unabhängig von der herrschenden Umgebungsfeuchte, aushärtet. Die vermischte bzw. ausgehärtete Zusammensetzung verfügt dabei überraschenderweise nur über einen geringen, nicht funktionskritischen Schwund.

Das Polyamin **PA** mit mindestens zwei primären Aminogruppen ist insbesondere ausgewählt aus der Gruppe bestehend aus 1,5-Diamino-2-methylpentan, 2-Butyl-2-ethyl-1,5-pentandiamin, 1,6-Hexandiamin, 2,5-Dimethyl-1,6-hexandiamin, 2,2,4- und 2,4,4-Trimethylhexamethylendiamin, 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Isophorondiamin, 2- und 4-Methyl-1,3-diaminocyclohexan und Mischungen davon, 1,3- und 1,4-Bis(aminomethyl)cyclohexan, 1,3-Bis(aminomethyl)benzol, 3-(2-Aminoethyl)aminopropylamin, Bis(hexamethylen)triamin, Diethylentriamin, Triethylentetramin, Tetraethylenpentamin, Pentaethlenhexamin, Dipropylentriamin, N-(2-Aminoethyl)-1,3-propandiamin, N,N'-Bis(3-aminopropyl)ethylendiamin, N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin und Polyoxypropylendiaminen mit einem mittleren Molekulargewicht im Bereich von 200 bis 300 g/mol.
Eine solche Komponente **B** ermöglicht eine besonders schnelle Aushärtung und besonders hohe Festigkeiten.

Von diesen Polyaminen bevorzugt sind 1,5-Diamino-2-methylpentan, 1,6-Hexandiamin, 2,2,4- und 2,4,4-Trimethylhexamethylendiamin, 1,7-Heptandiamin, 1,8-Octandiamin, Isophorondiamin, 1,3- und 1,4-Bis(aminomethyl)cyclohexan, 1,3-Bis(aminomethyl)benzol, 3-(2-Aminoethyl)aminopropylamin, Bis(hexamethylen)triamin, Diethylentriamin und N-(2-Aminoethyl)-1,3-propandiamin. Besonders bevorzugt sind 1,5-Diamino-2-methylpentan, 2,2,4- und 2,4,4-Trimethylhexamethylendiamin, Isophorondiamin, 1,3- und 1,4-Bis(aminomethyl)-cyclohexan und 1,3-Bis(aminomethyl)benzol.
Mit diesen Polyaminen wird nach der Aushärtung eine besonders homogene, nichtklebrige Oberfläche erhalten.

Besonders bevorzugt umfasst die Komponente **B** neben dem genannten Polyamin **PA** zusätzlich mindestens einen Aminwasserstoff-haltigen Emulgator. Ein solcher Emulgator verbessert die Wasserverträglichkeit von hydrophoben Anteilen der Zusammensetzung und wird bei der Aushärtung ins ausgehärtete Epoxidharz eingebaut.
Ein geeigneter Aminwasserstoff-haltiger Emulgator ist insbesondere ein Umsetzungsprodukt aus mindestens einem Diepoxid, mindestens einem Fettamin und mindestens einem hydrophilen Polyamin, insbesondere im Molverhältnis von ungefähr 1 : 1 : 1. Als hydrophiles Polyamin geeignet sind insbesondere Polyoxyalkylendiamine, insbesondere Polyoxyethylendiamine, sowie Polyalkylenamine, insbesondere N4-Amin, TETA, TEPA und PEHA.
Ein geeigneter Aminwasserstoff-haltiger Emulgator ist weiterhin insbesondere ein Umsetzungsprodukt aus mindestens einem Polyethylenglykol, mindestens einem Diepoxid und mindestens einem primären Diamin, insbesondere im Molverhältnis von ungefähr 1 : mindestens 2 : mindestens 2.
Ein geeigneter Aminwasserstoff-haltiger Emulgator ist weiterhin insbesondere ein Umsetzungsprodukt aus mindestens einem Diepoxid und mindestens einem Polyalkylenamin, insbesondere im Molverhältnis von ungefähr 1 : mindestens 2.
Ein geeigneter Aminwasserstoff-haltiger Emulgator ist weiterhin insbesondere ein Umsetzungsprodukt aus mindestens einem Polyethylenglykolmonoglycidylether, mindestens einem Polyamin mit zwei primären Aminogruppen und mindestens einem hydrophoben Monoglycidylether wie insbesondere Butyl- oder Kresylglycidylether, insbesondere im Molverhältnis von ungefähr 1 : mindestens 1 : 1.
Als "ungefähr" in Zusammenhang mit den in diesem Dokument erwähnten Molverhältnissen wird eine Abweichung von bis zu ±10 % bezeichnet.

Besonders bevorzugt ist eine Komponente **B,** welche als Aminwasserstoff-haltigen Emulgator
- ein Umsetzungsprodukt aus mindestens einem Diepoxid, mindestens einem Fettamin und mindestens einem Polyoxyalkylendiamin im Molverhältnis von ungefähr 1:1:1,
   und/oder
- ein Umsetzungsprodukt aus mindestens einem Diepoxid, mindestens einem Fettamin und mindestens einem Polyalkylenamin im Molverhältnis von ungefähr 1:1:1
   umfasst.

Diese Umsetzungsprodukte haben eine besonders gute emulgierende Wirkung, wodurch die Komponente **B** besonders gut mit der Komponente **A** verträglich ist. Als "gut verträglich" wird dabei die Eigenschaft bezeichnet, dass aus den beiden Komponenten mit einfachen Mischern bereits nach kurzer Mischzeit eine optisch homogene, schlierenfreie Masse erhalten wird, welche auch nach der Aushärtung keine Anzeichen von Entmischung aufweist.

Als Diepoxid geeignet sind insbesondere Bisphenol A-, Bisphenol F- oder Bisphenol A/F-Diglycidyl-Flüssigharze.

Als Fettamin geeignet sind insbesondere Dodecylamin, Tetradecylamin, Hexadecylamin, Octadecylamin, Eicosylamin, Docosylamin, sowie von natürlichen Fettsäuregemischen abgeleitete Fettamine, wie insbesondere Cocoalkylamin, C₁₆-C₂₂-Alkylamin, Soyaalkylamin, Oleylamin und Talgalkylamin, erhältlich beispielsweise unter den Handelsnamen Armeen® (von Akzo Nobel) oder Rofamin® (von Ecogreen Oleochemicals), insbesondere Armeen® 12D, Armeen® 18D, Armeen® CD, Armeen® HT, Armeen® M, Armeen® OD, Armeen® OVD und Armeen®TD, sowie Rofamin® KD, Rofamin® LD, Rofamin® STD, Rofamin® TD, Rofamin® RD, Rofamin® TD40, Rofamin® OD80, Rofamin® OD85 und Rofamin® OD90, sowie N-Dodecyl-1,3-propandiamin, N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, insbesondere erhältlich als Duomeen® CD, Duomeen® M, Duomeen® O, Duomeen® OV oder Duomeen® T (Akzo Nobel), sowie weiterhin von Fettaminen abgeleitete Triamine und Tetramine, wie insbesondere Cocoalkyldipropylentriamin, Oleyldipropylentriamin, Talgalkyldipropylentriamin, Oleyltripropylentetramin und Talgalkyltripropylentetramin, erhältlich beispielsweise als Triameen® C, Triameen® OV, Triameen® T, Tetrameen® OV und Tetrameen® T (Akzo Nobel).
Davon bevorzugt sind die Mono und die Diamine, insbesondere Cocoalkylamin und N-Cocoalkyl-1,3-propandiamin.

Als Polyoxyalkylendiamin geeignet sind insbesondere solche auf Basis von propoxyliertem Polyethylenglykol mit einem mittleren Molekulargewicht im Bereich von 500 bis 3000 g/mol, insbesondere die Typen Jeffamine® ED-600, Jeffamine® ED-900 und Jeffamine® ED-2003 (von Huntsman).

Als Polyalkylenamin geeignet sind insbesondere Triethylentetramin, Tetraethylenpentamin, Pentaethylenhexamin und N,N'-Bis(3-aminopropyl)ethylendiamin.

Am meisten bevorzugt ist eine Komponente **B** umfassend
- mindestens 10 Gewichts-% Wasser,
- mindestens ein Umsetzungsprodukt aus mindestens einem Diepoxid, mindestens einem Fettamin und mindestens einem Polyoxyalkylendiamin im Molverhältnis von ungefähr 1:1:1,
- mindestens ein Umsetzungsprodukt aus mindestens einem Diepoxid, mindestens einem Fettamin und mindestens einem Polyalkylenamin im Molverhältnis von ungefähr 1:1:1,
- mindestens ein Umsetzungsprodukt aus mindestens einem Diepoxid und mindestens einem Polyoxypropylendiamin mit einem mittleren Molekulargewicht im Bereich von 200 bis 300 g/mol im Molverhältnis von ungefähr 1:2, und
- mindestens ein Polyamin **PA** mit mindestens zwei primären Aminogruppen. Eine solche Komponente **B** stellt einen wässrigen Härter für Epoxidharze dar, welcher hervorragend lagerstabil ist, auch bei Temperaturen unter dem Gefrierpunkt. Sie ist ganz besonders gut mit der Komponente **A** vermischbar, wobei schnell eine optisch homogene, gut applizierbare Masse entsteht, welche rasch Festigkeit aufbaut und weitgehend unabhängig von den klimatischen Bedingungen, insbesondere unabhängig von der herrschenden Umgebungsfeuchte, aushärtet. Die vermischte bzw. ausgehärtete Zusammensetzung verfügt dabei überraschenderweise nur über einen besonders geringen, nicht funktionskritischen Schwund. Die ausgehärtete Zusammensetzung verfügt über eine nichtklebrige, besonders schöne, ebenmässige Oberfläche und ist frei von Blasen.

Die Komponente **A** und die Komponente **B** können weitere Bestandteile enthalten, wie insbesondere Füllstoffe und Verstärker, Pigmente, Weichmacher bzw. Verdünner, Härter und Vernetzer, Beschleuniger und Katalysatoren, Stabilisatoren, Haftvermittler, Rheologiehilfsmittel, Trocknungsmittel und dergleichen. Beim Einsatz derartiger weiterer Bestandteile ist darauf zu achten, dass diese untereinander sowie mit der jeweiligen Komponente verträglich sind und keine vorzeitigen Reaktionen, insbesondere mit dem silanfunktionellen Polymer bzw. mit dem Epoxidharz, eingehen.

Die Zusammensetzung umfasst insbesondere mindestens einen Katalysator für die Vernetzung des silanfunktionellen Polymers mittels Feuchtigkeit. Derartige Katalysatoren sind bevorzugt ausgewählt aus der Gruppe bestehend aus Organozinn(IV)-Verbindungen, Titanaten, Zirkonaten, Aluminaten, Titan-, Zirkonium- oder Aluminium-Chelaten, tertiären Aminen, Amidinen und Guanidinen, beispielsweise Dibutylzinndilaurat, Dioctylzinndilaurat, Dibutylzinndiacetylacetonat und Dioctylzinndiacetylacetonat, Tetraisobutoxytitanat und Diisobutoxytitan-bis-(ethylacetoacetat), N,N-Dimethylbenzylamin, N,N-Dimethylcyclohexylamin und 1,4-Diazabicyclo[2.2.2]octan, 1,8-Diazabicyclo[5.4.0]undec-7-en und 1,1,3,3-Tetramethylguanidin; sowie Mischungen der genannten Katalysatoren. Während Organozinnverbindungen, Titanate, Zirkonate, Aluminate und die Chelate bevorzugt in der Komponente **A** eingesetzt werden, werden tertiäre Amine, Amidine und Guanidine bevorzugt in der Komponente **B** eingesetzt.

In einer bevorzugten Ausführungsform enthält die Komponente **B** der Zusammensetzung keinen metallhaltigen Katalysator. Dies weist den Vorteil auf, dass während der Lagerung der Komponente **B** keine Komplexierung zwischen einem metallhaltigen Katalysator und amingruppen-haltigen Bestandteilen der Komponente **B** auftreten können, was unerwünscht ist.
Weiterhin bevorzugt ist die gesamte Zusammensetzung frei von Zinn(II)-Verbindungen, bzw. frei von bivalenten Zinnverbindungen.

Die Zusammensetzung umfasst weiterhin insbesondere mindestens ein Aminosilan oder Epoxysilan oder Mercaptosilan, wobei ein Epoxysilan bevorzugt als Bestandteil der Komponente **A** und ein Amino- oder Mercaptosilan bevorzugt als Bestandteil der Komponente **B** vorhanden ist. Besonders geeignet sind dabei 3-Aminopropyl-dialkoxyalkylsilane, 3-Aminopropyl-trialkoxysilane, N-(2-Aminoethyl)-3-aminopropyl-dialkoxyalkylsilane, N-(2-Aminoethyl)-3-aminopropyl-trialkoxysilane, 3-Glycidoxypropyltrialkoxysilane und 3-Mercaptopropyl-trialkoxysilane.

Bevorzugt sind 3-Aminopropyl-trimethoxysilan, 3-Aminopropyl-dimethoxymethylsilan, 3-Aminopropyl-triethoxysilan, N-(2-Aminoethyl)-3-aminopropyl-dimethoxymethylsilan, N-(2-Aminoethyl)-3-aminopropyl-trimethoxysilan, N-(2-Aminoethyl)-3-aminopropyl-triethoxysilan, 3-Glycidoxypropyltrimethoxysilan und 3-Glycidoxypropyltriethoxysilan.
Der Einsatz eines solchen Silans kann eine beschleunigte Aushärtung und nach dem Vermischen der Komponenten eine verbesserte Verträglichkeit der unterschiedlichen Phasen sowie eine kovalente Verknüpfung des silanfunktionellen Polymers mit dem Epoxidharz bewirken.
Besonders bevorzugt enthält die Zusammensetzung mindestens ein Epoxysilan, welches insbesondere als Bestandteil der Komponente **A** vorliegt. Diese Ausführungsform weist den Vorteil auf, dass das Epoxysilan vor dem Vermischen der beiden Komponenten nicht mit Wasser in Kontakt kommt, wodurch es in seiner Reaktivität bei der Lagerung nicht verändert wird.

Die Zusammensetzung umfasst weiterhin insbesondere mindestens einen Füllstoff, insbesondere als Bestandteil der Komponente **A.** Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignet sind anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Glimmer (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver, Hohlkugeln oder Glaskugeln.
Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Aluminiumhydroxid.

Es ist durchaus möglich und kann sogar von Vorteil sein, eine Mischung verschiedener Füllstoffe einzusetzen.
Eine geeignete Menge Füllstoff in der Zusammensetzung liegt bevorzugt im Bereich von 10 bis 70 Gew.-%, insbesondere 20 bis 60 Gew.-%.

Weiterhin kann die Zusammensetzung zusätzliche Bestandteile enthalten, insbesondere die folgenden:
- Weichmacher, insbesondere Carbonsäureester wie Phthalate, insbesondere Dioctylphthalat, Diisononylphthalat oder Diisodecylphthalat, hydrierte Phtalate, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester oder Polybutene;
- Lösemittel;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Haftvermittler und/oder Vernetzer, insbesondere Silane wie die bereits erwähnten Aminosilane, Epoxysilane und Mercaptosilane, sowie Aminosilane mit sekundären Aminogruppen, (Meth)acrylatosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylatosilanen oder Anhydridosilanen;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe;
- Rheologie-Modifizierer, insbesondere Verdickungsmittel, insbesondere Schichtsilikate, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Stabilisatoren gegen Oxidation, Wärme, Licht und UV-Strahlung;
- natürliche Harze, Fette oder Öle wie Kolophonium, Schellack, Leinöl, Rizinusöl und Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinolbis(diphenylphosphat), Bisphenol-A-bis(diphenylphosphat) und Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in silanvernetzenden und/oder Epoxidharz-basierten Zusammensetzungen eingesetzte Substanzen.

Die Komponente **A** der zweikomponentigen Zusammensetzung wird unter Ausschluss von Feuchtigkeit hergestellt und aufbewahrt. Die Komponente **A** ist lagerstabil, das heisst, sie kann unter Ausschluss von Feuchtigkeit in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Die Komponente **B** ist in einem geschlossenen Gebinde ebenfalls lagerstabil.

Bei der Applikation der zweikomponentigen Zusammensetzung werden die Komponenten **A** und **B,** beispielsweise durch Rühren, Kneten Walzen oder dergleichen, insbesondere jedoch über einen Statikmischer oder mit Hilfe eines dynamischen Mischers, miteinander vermischt.
Dabei kommt das Amin-Epoxid-Addukt und weitere gegebenenfalls in der Komponente **B** vorhandene Aminwasserstoffe in Kontakt mit dem Epoxidharz der Komponente **A,** was zu einer Vernetzung des Epoxidharzes in der Zusammensetzung führt. Das in der Komponente **B** vorhandene Wasser kommt in Kontakt mit dem silanfunktionellen Polymer, was zur Vernetzung des silanfunktionellen Polymers in der Zusammensetzung führt.

Bei der Applikation der zweikomponentigen Zusammensetzung werden die beiden Komponenten vorzugsweise in einem solchen Verhältnis eingesetzt, dass das Gewichtsverhältnis zwischen der Komponente **A** und der Komponente **B** im Bereich von 1:1 bis 50:1, bevorzugt 1:1 bis 25:1, besonders bevorzugt 1:1 bis 10:1, liegt.

Die Vermischung der Komponenten **A** und **B** und die Aushärtung erfolgen bevorzugt bei Umgebungsbedingungen, insbesondere bei einer Temperatur im Bereich von 10 bis 30 °C. Eine Aushärtung bei höheren Temperaturen ist aber durchaus auch möglich und führt zu einer schnelleren Erreichung der maximalen Härte. In gewissen Fällen kann es vorteilhaft sein, die teilgehärtete Zusammensetzung mit Hilfe von erhöhter Temperatur, beispielsweise im Bereich von 40 bis 100°C, nachzuhärten bzw. vollständig auszuhärten.

Insbesondere verläuft die Aushärtung der Zusammensetzung in der Art, dass einerseits eine ausreichende Topf- bzw. Offenzeit gewährleistet ist, um die Zusammensetzung richtig zu applizieren, und dass andererseits die Aushärtung schnell soweit fortgeschritten ist, dass die Zusammensetzung weiter bearbeitet werden kann bzw. eine mit der Zusammensetzung ausgeführte Verklebung selbsttragend ist und transportiert werden kann.

Weiterhin umfasst die vorliegende Erfindung die Verwendung der zweikomponentigen Zusammensetzung als Klebstoff, Dichtstoff oder Beschichtung.
Die erfindungsgemässe zweikomponentige Zusammensetzung eignet sich insbesondere zum Verkleben, Abdichten oder Beschichten von Substraten aus
- Glas, Glaskeramik, Beton, Mörtel, Backstein, Ziegel, Gips und Natursteinen wie Granit oder Marmor;
- Metallen und Legierungen, wie Aluminium, Eisen, Stahl und Buntmetalle, inklusive oberflächenveredelte Metalle und Legierungen, wie verzinkte und verchromte Metalle;
- Leder, Textilien, Papier, Holz, mit Harzen, beispielsweise Phenol-, Melamin- oder Epoxidharzen, gebundenen Holzwerkstoffen, Harz-Textil-Verbundwerkstoffen und weiteren sogenannten Polymer-Composites;
- Kunststoffen, insbesondere Hart- und Weich-PVC, ABS, Polycarbonat (PC), Polyamid (PA), Polyester, PMMA, Epoxidharze, PUR, POM, PO, PE, PP, EPM und EPDM, wobei die Kunststoffe gegebenenfalls mittels Plasma, Corona oder Flammen oberflächenbehandelt sind;
- Faserverstärkten Kunststoffen (Komposits), wie Kohlefaser-verstärkten Kunststoffen (CFK), Glasfaser-verstärkten Kunststoffen (GFK) und Sheet Moulding Compounds (SMC);
- beschichteten Substraten, wie pulverbeschichteten Metallen oder Legierungen;
- Farben und Lacken, insbesondere Automobildecklacken.
Die Substrate können bei Bedarf vor dem Applizieren der Zusammensetzung vorbehandelt werden, insbesondere durch physikalische und/oder chemische Reinigungsverfahren oder das Aufbringen eines Haftvermittlers, einer Haftvermittlerlösung oder eines Primers.

Bevorzugt ist die Verwendung der zweikomponentigen Zusammensetzung für elastische bis semistrukturelle Klebe- und Abdichtungsanwendungen in der Bau- und Fertigungsindustrie sowie im Fahrzeugbau, beispielsweise für die Fugenabdichtung, Dachabdichtung, Parkettverklebung, Fassadenelementverklebung, Anbauteilverklebung, Nahtabdichtung, Hohlraumversiegelung, Montage, Karosserieverklebung, Scheibenverklebung, Komposit-Verklebung.

Die zweikomponentige Zusammensetzung ist insbesondere auch dann vorteilhaft, wenn aus Gründen des Arbeits- und Gesundheitsschutzes isocyanatfreie Produkte eingesetzt werden sollen.

Weiterhin betrifft die Erfindung eine ausgehärtete Zusammensetzung, erhalten aus der vorhergehend beschriebenen zweikomponentigen Zusammensetzung durch Mischen der Komponente **A** mit der Komponente **B.**

Weiterhin betrifft die Erfindung einen Artikel, welcher eine zumindest teilweise gehärtete Zusammensetzung gemäss vorhergehender Beschreibung aufweist, wobei es sich bei diesem Artikel insbesondere um ein Bauwerk, ein Industriegut oder ein Transportmittel, oder einen Teil davon, handelt.
Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Windkraftanlagen, Spiegel, Scheiben, Wannen, Weisswaren, Haushaltsapparate, Geschirrspüler, Waschmaschinen, Backöfen, Scheinwerfer, Nebelleuchten und Solarpanels wie Photovoltaik- oder Solarthermie-Module.

Die beschriebene Zusammensetzung zeichnet sich insbesondere durch spezielle mechanische Eigenschaften aus, welche in einem breiten Ausmass variiert werden können, von weichelastisch mit hoher Dehnbarkeit und guter Festigkeit bis zu zähelastisch mit geringerer Dehnbarkeit und sehr hoher Festigkeit. Die Variation der mechanischen Eigenschaften kann dabei insbesondere durch das Verhältnis zwischen silanfunktionellem Polymer und Epoxidharz in der Komponente **A** sowie durch die Art und Menge der Komponente **B** beeinflusst werden.

Mit einer Komponente **B,** welche einen wässrigen Härter für Epoxidharze darstellt wie beschrieben, wird eine besonders gute Mischbarkeit der beiden Komponenten erhalten, und die Oberfläche der ausgehärteten Zusammensetzung ist homogen, klebfrei und trocken, ohne matten Belag oder dergleichen.
Mit dem beschriebenen Amin-Epoxid-Addukt auf Basis eines aromatischen Monoepoxids werden ebenfalls ausgezeichnete Eigenschaften erreicht, insbesondere sehr hohe Festigkeiten; und die Oberfläche der ausgehärteten Zusammensetzung ist ebenfalls homogen und absolut klebfrei und trocken, ohne matten Belag oder dergleichen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.

### Beschreibung der Prüfmethoden

Die **Viskosität** wurde auf einem thermostatisierten Kegel-Platte-Viskosimeter Rheotec RC30 (Kegeldurchmesser 50 mm, Kegelwinkel 1°, Kegelspitze-Platten-Abstand 0.05 mm, Scherrate 10-100 s⁻¹) gemessen.

Der **Geruch** wurde qualitativ durch Riechen mit der Nase an der vermischten Zusammensetzung beurteilt, wobei ein unangenehmer, stechender Amingeruch als "stark", ein leichter Geruch als "leicht" und ein kaum oder nicht wahrnehmbarer Geruch als "kein" bewertet wurde.

Zur Messung der **Gelierzeit** wurde ein kleiner Teil der vermischten raumtemperaturwarmen Zusammensetzung in einer Schichtdicke von ca. 3 mm auf Pappkarton aufgetragen und im Normklima ("NK"; 23±1°C, 50±5% relative Luftfeuchtigkeit) die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Die **Zugfestigkeit,** die **Bruchdehnung,** und der Elastizitätsmodul (**E-Modul**) bei 0.5 bis 5 % Dehnung wurden nach DIN EN 53504 (Zuggeschwindigkeit 200 mm/min) bestimmt an Hanteln mit einer Länge von 75 mm, bei einer Steglänge von 30 mm und einer Stegbreite von 4 mm, welche durch Ausstanzen aus Filmen von ca. 3 mm Dicke der bei den jeweils angegebenen Bedingungen ausgehärteten Zusammensetzung hergestellt wurden.

Der **Aspekt** wurde folgendermassen beurteilt: "sw" für schneeweiss, "w" für weiss, "g" für gelb, "k" für klebrig und "l.k" für leicht klebrig.

### Silanfunktionelle Polymere:

### Polymer-1:

Unter Feuchtigkeitsausschluss wurden 1000 g Polyol Acclaim® 12200 (von Bayer; low monol Polyoxypropylendiol, OH-Zahl 11.0 mg KOH/g, Wassergehalt ca. 0.02 Gew.-%), 43.6 g Isophorondiisocyanat (Vestanat® IPDI von Degussa), 126.4 g Diisodecylphthalat und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilyl-propyl)-amino-bernsteinsäurediethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Polymer-2:

SPUR+® 1015LM von Momentive.

### Polymer-3:

MS Polymer™ S203H von Kaneka.

### Amin-Epoxid-Addukte bzw. wässrige Härter

### Härter-1:

In einem Rundkolben wurden unter Stickstoffatmosphäre 76.60 g Jeffamine® ED-2003 (von Huntsman; Polyoxyalkylendiamin auf Basis von propoxyliertem Polyethylenglykol, Molekulargewicht ca. 2000 g/mol) und 7.66 g Armeen® CD (von Akzo Nobel; Cocosalkylamin (C₁₂-Fettamin) mit Molekulargewicht ca. 200 g/mol) bei einer Temperatur von 90 °C vorgelegt. Unter gutem Rühren wurden langsam 14.36 g Araldite® GY 250 (Huntsman; Bisphenol-A-Diglycidylether, EEW ca. 187 g/Eq) zugegeben, wobei darauf geachtet wurde, dass die Temperatur nicht über 105 °C stieg, und anschliessend während 2 Stunden bei 90 °C gerührt. Dann wurden 3.83 g 2,4-Pentandion zugegeben und während 15 Min. bei 90 °C eingerührt. Darauf wurden 19.99 g N4-Amin (BASF; N,N'-Bis(3-aminopropyl)ethylendiamin) und anschliessend weitere 11.49 g 2,4-Pentandion zu gegeben und während 15 Min. bei 90 °C eingerührt. Darauf wurden weitere 22.98 g Armeen® CD und dann weitere 43.09 g Araldite® GY 250 zugegeben, wobei darauf geachtet wurde, dass die Temperatur nicht über 105 °C stieg, und anschliessend während 2 Stunden bei 90 °C gerührt. Anschliessend wurde die Reaktionsmischung mit 126.5 g Jeffamine® D-230 (Huntsman; Polypropylenglykoldiamin mit Molekulargewicht ca. 240 g/mol) versetzt und unter gutem Rühren langsam weitere 98.5 g Araldite® GY 250 zugegeben, wobei darauf geachtet wurde, dass die Temperatur nicht über 105 °C stieg, und während 90 Min. bei 90 °C gerührt. Anschliessend wurden 75 g Isophorondiamin (Evonik; 1-Amino-3-aminomethyl-3,5,5-trimethylcyclohexan) zugegeben und zum Schluss wurde die Reaktionsmischung mit 194.5 g Wasser versetzt, abgekühlt und der Härter in einem verschlossenen Gefäss aufgewahrt. Erhalten wurde eine gelbliche Flüssigkeit mit einer Viskosität bei 20 °C von 42 Pa·s, einem theoretischen AHEW von 160 g/eq und einem Wassergehalt von 20 Gewichts-%.

### Härter-2:

INCOREZ 148/300 (von Incorez Ltd.), ein Härter auf Basis von Polyamin-Epoxid-Addukten mit einem AHEW von 140 g/eq und einem Wassergehalt von 20 Gewichts-%, enthaltend Tetraethylenpentamin.

### Härter-3:

Umsetzungsprodukt aus 116.0 Gewichtsteilen 1,5-Diamino-2-methylpentan und 182 Gewichtsteilen Araldite® DY-K (Monoglycidylether von Kresol mit EEW ca. 182 g/Eq, von Huntsman). Gelbliche Flüssigkeit mit einer Viskosität bei 20 °C von 5.8 Pa·s und einem theoretischen AHEW von 99.4 g/eq.

### Herstellung von Komponenten A und Komponenten B

Für jede Komponente **A** und jede Komponente **B** wurden die in der Tabelle 1 bzw. 2 angegebenen Inhaltsstoffe in den angegebenen Mengen (in Gewichtsteilen) mittels eines dynamischen Mischers vermischt und unter Ausschluss von Feuchtigkeit aufbewahrt.

**Tabelle 1: Zusammensetzung der Komponenten A-1 bis A-8.**

| **Komponente:** | **A-1** | **A-2** | **A-3** | **A-4** | **A-5** | **A-6** | **A-7** | **A-8** |
|---|---|---|---|---|---|---|---|---|
| Polymer-1 | 49.5 | 49.2 | 49.35 | 66.1 | - | - | 78.8 | 32.8 |
| Polymer-2 | - | - | - | - | 66.3 | - | - | - |
| Polymer-3 | - | - | - | - | - | 66.1 | - | - |
| Araldit® GY-250 | 49.5 | 49.2 | 49.35 | 32.6 | 32.7 | 32.6 | 19.7 | 66.5 |
| DBTDL¹ | 1.0 | 1.0 | 1.0 | 1.3 | 1.0 | - | 1.5 | 0.7 |
| DBTacac² | - | - | - | - | - | 1.3 | - | - |
| Epoxysilan³ | - | 0.6 | 0.3 | - | - | - | - | - |

| | | | | | | | | |
|---|---|---|---|---|---|---|---|---|
| ¹ Dibutylzinndilaurat 10 Gewichts-% in Diisodecylphtalat ² Dibutylzinndiacetylacetonat 10 Gewichts-% in Diisodecylphtalat ³ 3-Glycidoxypropyl-trimethoxysilan | | | | | | | | |

**Tabelle 2: Zusammensetzung der Komponenten B-1 bis B-7.**

| **Komponente:** | **B-1** | **B-2** | **B-3** | **B-4** | **B-5** | **B-6** | **B-7** |
|---|---|---|---|---|---|---|---|
| Härter-1 | 98.0 | 99.0 | 100.0 | 97.5 | - | - | - |
| Härter-2 | - | - | - | - | 98.0 | - | - |
| Härter-3 | - | - | - | - | - | 93.1 | 88.2 |
| Aminosilan¹ | 2.0 | 1.0 | - | 2.0 | 2.0 | 1.9 | 1.8 |
| DBU² | - | - | - | 0.5 | - | - | - |
| Wasser | - | - | - | | - | 5.0 | 10.0 |

| | | | | | | | |
|---|---|---|---|---|---|---|---|
| ¹ N-(2-Aminoethyl)-3-aminopropyltrimethoxysilan ² 1,8-Diazabicyclo[5.4.0]undec-7-en | | | | | | | |

### Herstellung von vermischten Zusammensetzungen

Für jede Zusammensetzung wurden die in den Tabellen 3 bis 5 angegebenen Komponenten **A** und **B** in den angegebenen Mengen (in Gewichtsteilen) mittels eines dynamischen Mischers zu einer homogenen Flüssigkeit vermischt und diese unverzüglich wie vorgängig beschrieben geprüft:
Die Resultate sind in den Tabellen 3 bis 5 angegeben.

Die ausgehärteten Zusammensetzungen zeigen alle ein ausgezeichnetes Rückstellvermögen.

**Tabelle 3: Zusammensetzung und Eigenschaften von Z-1 bis Z-8.**

| **Zusammensetzung** | ***Z-1*** | ***Z-2*** | ***Z-3*** | ***Z-4*** | ***Z-5*** | ***Z-6*** | ***Z-7*** | ***Z-8*** |
|---|---|---|---|---|---|---|---|---|
| Komponente **A-1** | 100 | 100 | 100 | - | - | - | - | 100 |
| Komponente **A-2** | - | - | - | 100 | 100 | - | - | - |
| Komponente **A-3** | - | - | - | - | - | 100 | 100 | - |
| Komponente **B-1** | 10 | 25 | 40 | - | - | - | - | - |
| Komponente **B-2** | - | - | - | - | - | 25 | 35 | - |
| Komponente **B-3** | - | - | - | 25 | 35 | - | - | 20 |
| Geruch | kein | kein | kein | kein | kein | kein | kein | kein |
| Gelierzeit (min.) | 145 | 110 | n.b. | 70 | 50 | 50 | 37 | 240 |

| *Mechanische Eigenschaften (14 Tage NK):* | | | | | | | | |
|---|---|---|---|---|---|---|---|---|
| Zugfestigkeit (MPa) | 1.2 | 2.0 | 2.6 | 2.0 | 2.6 | 1.7 | 1.9 | 1.6 |
| Bruchdehnung (%) | 175 | 210 | 135 | 250 | 160 | 210 | 120 | 440 |
| E-Modul | 1.0 | 2.9 | 4.3 | 2.9 | 4.8 | 2.7 | 4.2 | 0.7 |
| Aspekt | sw | sw | sw | w | w | w | w | w |

| *Mechanische Eigenschaften (14 Tage NK* + *2 Tage 80°C):* | | | | | | | | |
|---|---|---|---|---|---|---|---|---|
| Zugfestigkeit (MPa) | 4.1 | 3.9 | 3.8 | 4.0 | 3.9 | 2.8 | 2.9 | 3.4 |
| Bruchdehnung (%) | 240 | 90 | 80 | 108 | 97 | 72 | 58 | 200 |
| E-Modul | 3.0 | 5.9 | 8.2 | 5.9 | 8.0 | 5.3 | 7.1 | 2.2 |

| | | | | | | | | |
|---|---|---|---|---|---|---|---|---|
| "n.b." steht für "nicht bestimmt" | | | | | | | | |

**Tabelle 4: Zusammensetzung und Eigenschaften von Z-9 bis Z-16.**

| **Zusammensetzung** | ***Z-9*** | ***Z-10*** | ***Z-11*** | ***Z-12*** | ***Z-13*** | ***Z-14*** | ***Z-15*** | ***Z-16*** |
|---|---|---|---|---|---|---|---|---|
| Komponente **A-1** | 100 | 100 | 100 | 100 | 100 | - | - | - |
| Komponente **A-4** | - | - | - | - | - | 100 | 100 | 100 |
| Komponente **B-1** | - | - | - | - | - | 10 | 30 | - |
| Komponente **B-4** | - | - | - | - | - | - | - | 30 |
| Komponente **B-5** | 20 | 35 | - | - | - | - | - | - |
| Komponente **B-6** | - | - | 16 | 25 | - | - | - | - |
| Komponente **B-7** | - | - | - | - | 16 | - | - | - |
| Geruch | leicht | leicht | kein | kein | kein | kein | kein | kein |
| Gelierzeit (min.) | 240 | 95 | 130 | 80 | 90 | 75 | 50 | 15 |

| *Mechanische Eigenschaften (14 Tage NK):* | | | | | | | | |
|---|---|---|---|---|---|---|---|---|
| Zugfestigkeit (MPa) | 1.7 | 1.7 | 6.2 | 5.6 | 5.2 | 1.4 | 2.7 | 2.4 |
| Bruchdehnung (%) | 200 | 75 | 210 | 140 | 240 | 230 | 165 | 165 |
| E-Modul | 3.7 | 12.6 | 2.5 | 3.8 | 2.1 | 0.5 | 1.9 | 1.9 |
| Aspekt | w | w | sw | sw | sw | w | w | w |

| *Mechanische Eigenschaften (14 Tage NK* + *2 Tage 80°C):* | | | | | | | | |
|---|---|---|---|---|---|---|---|---|
| Zugfestigkeit (MPa) | 2.7 | 2.4 | 5.8 | 4.0 | 5.1 | 2.4 | 3.1 | 2.1 |
| Bruchdehnung (%) | 110 | 45 | 125 | 45 | 125 | 170 | 140 | 125 |
| E-Modul | 9.1 | 22.6 | 5.1 | 8.0 | 4.6 | 1.7 | 3.1 | 2.5 |

**Tabelle 5: Zusammensetzung und Eigenschaften von Z-17 bis Z-23.**

| **Zusammensetzung** | ***Z-17*** | ***Z-18*** | ***Z-19*** | ***Z-20*** | ***Z-21*** | ***Z-22*** | ***Z-23*** |
|---|---|---|---|---|---|---|---|
| Komponente **A-5** | - | 100 | 100 | - | - | - | - |
| Komponente **A-6** | - | - | - | 100 | 100 | - | - |
| Komponente **A-7** | 100 | - | - | - | - | - | - |
| Komponente **A-8** | - | - | - | - | - | 100 | 100 |
| Komponente **B-1** | 20 | 20 | - | 20 | - | 20 | 40 |
| Komponente **B-4** | - | - | 20 | - | 20 | - | - |
| Geruch | kein | kein | kein | kein | kein | kein | kein |
| Gelierzeit (min.) | 45 | 70 | 60 | 240 | 170 | 230 | 200 |
| *Mechanische Eigenschaften (14 Tage NK):* | | | | | | | |
| Zugfestigkeit (MPa) | 2.0 | 1.2 | 1.3 | 1.2 | 1.1 | 1.6 | 0.6 |
| Bruchdehnung (%) | 230 | 590 | 550 | 660 | 600 | 69 | 1 |
| E-Modul | 1.2 | 0.4 | 0.4 | 0.4 | 0.3 | 9.3 | n.b. |
| Aspekt | w | w, k | 9 | w, k | w, l.k | w | w |
| *Mechanische Eigenschaften (14 Tage NK* + *2 Tage 80°C):* | | | | | | | |
| Zugfestigkeit (MPa) | 2.0 | 1.5 | 1.6 | 1.5 | 1.3 | 4.7 | 4.1 |
| Bruchdehnung (%) | 195 | 510 | 430 | 430 | 440 | 21 | 9 |
| E-Modul | 1.1 | 0.6 | 0.5 | 0.6 | 0.4 | 40.4 | 66.5 |

## Patentansprüche

1. Zweikomponentige Zusammensetzung bestehend aus einer Komponente **A** umfassend
- mindestens ein silanfunktionelles Polymer, und
- mindestens ein Epoxidharz;
und einer Komponente **B** umfassend
- Wasser, und
- mindestens ein Amin-Epoxid-Addukt, welches mindestens drei Aminwasserstoffe aufweist.

2. Zweikomponentige Zusammensetzung gemäss Anspruch 1, **dadurch gekennzeichnet, dass** das Gewichtsverhältnis zwischen dem silanfunktionellen Polymer und dem Epoxidharz im Bereich von 10:1 bis 1:3 liegt.

3. Zweikomponentige Zusammensetzung gemäss Anspruch 1 oder 2, **dadurch gekennzeichnet, dass** das Amin-Epoxid-Addukt ein Umsetzungsprodukt aus mindestens einem Polyamin und mindestens einem Monoepoxid ist.

4. Zweikomponentige Zusammensetzung gemäss einem der Ansprüche 1 bis 3, **dadurch gekennzeichnet, dass** das Amin-Epoxid-Addukt ein Umsetzungsprodukt aus mindestens einem Polyamin und mindestens einem Diepoxid ist.

5. Zweikomponentige Zusammensetzung gemäss Anspruch 3 oder 4, **dadurch gekennzeichnet, dass** das Polyamin ausgewählt ist aus der Gruppe bestehend aus 1,5-Diamino-2-methylpentan, 2,2,4- und 2,4,4-Trimethylhexamethylendiamin, Isophorondiamin, 1,3- und 1,4-Bis(aminomethyl)cyclohexan, 1,3-Bis(aminomethyl)benzol, Diethylentriamin, Triethylentetramin, Tetraethylenpentamin, Pentaethylenhexamin, N-(2-Aminoethyl)-1,3-propandiamin, N,N'-Bis(3-aminopropyl)ethylendiamin und Polyoxypropylen- und Polyoxyethylendiaminen mit einem mittleren Molekulargewicht im Bereich von 200 bis 3000 g/mol.

6. Zweikomponentige Zusammensetzung gemäss einem der Ansprüche 1 bis 5, **dadurch gekennzeichnet, dass** die Komponente **B** 5 bis 30 Gewichts-% Wasser enthält.

7. Zweikomponentige Zusammensetzung gemäss einem der Ansprüche 1 bis 6, **dadurch gekennzeichnet, dass** die Komponente **B** zusätzlich mindestens ein Polyamin mit mindestens zwei primären Aminogruppen umfasst, welches nicht identisch ist mit den zur Herstellung des Amin-Epoxid-Adduktes verwendeten Polyaminen.

8. Zweikomponentige Zusammensetzung gemäss Anspruch 7, **dadurch gekennzeichnet, dass** die Komponente **B** zusätzlich mindestens einen Aminwasserstoff-haltigen Emulgator umfasst.

9. Zweikomponentige Zusammensetzung gemäss Anspruch 8, **dadurch gekennzeichnet, dass** der Aminwasserstoff-haltige Emulgator
- ein Umsetzungsprodukt aus mindestens einem Diepoxid, mindestens einem Fettamin und mindestens einem Polyoxyethylendiamin im Molverhältnis von ungefähr 1:1:1,
und/oder
- ein Umsetzungsprodukt aus mindestens einem Diepoxid, mindestens einem Fettamin und mindestens einem Polyalkylenamin im Molverhältnis von ungefähr 1:1:1
darstellt.

10. Zweikomponentige Zusammensetzung gemäss einem der vorhergehenden Ansprüche, **dadurch gekennzeichnet, dass** sie zusätzlich mindestens einen Katalysator für die Vernetzung des silanfunktionellen Polymers mittels Feuchtigkeit umfasst.

11. Zweikomponentige Zusammensetzung gemäss einem der vorhergehenden Ansprüche, **dadurch gekennzeichnet, dass** sie zusätzlich mindestens ein Aminosilan oder Epoxysilan oder Mercaptosilan umfasst.

12. Zweikomponentige Zusammensetzung gemäss einem der vorhergehenden Ansprüche, **dadurch gekennzeichnet, dass** sie zusätzlich mindestens einen Füllstoff umfasst.

13. Zweikomponentige Zusammensetzung gemäss einem der vorhergehenden Ansprüche, **dadurch gekennzeichnet, dass** das Gewichtsverhältnis zwischen der Komponente **A** und der Komponente **B** im Bereich von 1:1 bis 50:1 liegt.

14. Verwendung einer zweikomponentigen Zusammensetzung gemäss einem der Ansprüche 1 bis 13 als Klebstoff, Dichtstoff oder Beschichtung.

15. Ausgehärtete Zusammensetzung erhalten aus einer zweikomponentigen Zusammensetzung gemäss einem der Ansprüche 1 bis 13 durch Mischen der Komponente **A** mit der Komponente **B.**

## Claims

1. A two-component composition consisting of a component **A,** which comprises
- at least one silane-functional polymer and
- at least one epoxy resin;
and a component **B,** which comprises
- water and
- at least one amine-epoxy adduct which has at least three amine hydrogens.

2. The two-component composition according to claim 1, **characterized in that** the ratio by weight of the silane-functional polymer to the epoxy resin is within a range of 10:1 to 1:3.

3. The two-component composition according to claim 1 or 2, **characterized in that** the amine-epoxy adduct is a reaction product of at least one polyamine and at least one monoepoxide.

4. The two-component composition according to any one of claims 1 to 3, **characterized in that** the amine-epoxy adduct is a reaction product of at least one polyamine and at least one diepoxide.

5. The two-component composition according to claim 3 or 4, **characterized in that** the polyamine is selected from the group consisting of 1,5-diamino-2-methylpentane, 2,2,4- and 2,4,4-trimethylhexamethylenediamine, isophoronediamine, 1,3- and 1,4-bis(aminomethyl)cyclohexane, 1,3-bis(aminomethyl)benzene, diethylenetriamine, triethylenetetramine, tetraethylenepentamine, pentaethylenehexamine, N-(2-aminoethyl)-1,3-propanediamine, N,N'-bis(3-aminopropyl)ethylenediamine and polyoxypropylene and polyoxyethylene diamines having an average molecular weight ranging from 200 to 3000 g/mol.

6. The two-component composition according to any one of claims 1 to 5, **characterized in that** component **B** contains 5 to 30 wt% water.

7. The two-component composition according to any one of claims 1 to 6, **characterized in that** component **B** additionally comprises at least one polyamine having at least two primary amino groups, which is not identical to the polyamines used for producing the amine-epoxy adduct.

8. The two-component composition according to claim 7, **characterized in that** component **B** additionally comprises at least one amine hydrogen-containing emulsifier.

9. The two-component composition according to claim 8, **characterized in that** the amine hydrogen-containing emulsifier
- is a reaction product of at least one diepoxide, at least one fatty amine and at least one polyoxyethylenediamine in a molar ratio of approximately 1:1:1,
and/or
- a reaction product of at least one diepoxide, at least one fatty amine and at least one polyalkylene amine in a molar ratio of approximately 1:1:1.

10. The two-component composition according to any one of the preceding claims, **characterized in that** it additionally comprises at least one catalyst for crosslinking the silane-functional polymer by means of moisture.

11. The two-component composition according to any one of the preceding claims, **characterized in that** it additionally comprises at least one aminosilane or epoxysilane or mercaptosilane.

12. The two-component composition according to any one of the preceding claims, **characterized in that** it additionally comprises at least one filler material.

13. The two-component composition according to any one of the preceding claims, **characterized in that** the ratio by weight of component **A** to component **B** ranges from 1:1 to 50:1.

14. The use of a two-component composition according to any one of claims 1 to 13 as an adhesive, a sealant or a coating.

15. A cured composition obtained from a two-component composition according to any one of claims 1 to 13 by mixing component **A** with component **B.**

## Revendications

1. Composition bicomposante constituée par un composant **A** comprenant :
- au moins un polymère à fonction silane et
- au moins une résine époxyde ;
et un composant **B** comprenant :
- de l'eau et
- au moins un adduit amine-époxyde, qui comprend au moins trois hydrogènes d'amine.

2. Composition bicomposante selon la revendication 1, **caractérisée en ce que** le rapport en poids entre le polymère à fonction silane et la résine époxyde se situe dans la plage allant de 10:1 à 1:3.

3. Composition bicomposante selon la revendication 1 ou 2, **caractérisée en ce que** l'adduit amine-époxyde est un produit de réaction d'au moins une polyamine et d'au moins un monoépoxyde.

4. Composition bicomposante selon l'une quelconque des revendications 1 à 3, **caractérisée en ce que** l'adduit amine-époxyde est un produit de réaction d'au moins une polyamine et d'au moins un diépoxyde.

5. Composition bicomposante selon la revendication 3 ou 4, **caractérisée en ce que** la polyamine est choisie dans le groupe constitué par le 1,5-diamino-2-méthylpentane, la 2,2,4- et 2,4,4-triméthylhexaméthylène-diamine, l'isophorone-diamine, le 1,3- et 1,4-bis(aminométhyl)cyclohexane, le 1,3-bis(aminométhyl)benzène, la diéthylène-triamine, la triéthylène-tétramine, la tétraéthylène-pentamine, la pentaéthylène-hexamine, la N-(2-aminoéthyl)-1,3-propane-diamine, la N,N'-bis(3-aminopropyl)éthylène-diamine et les polyoxypropylène- et polyoxyéthylène-diamines ayant un poids moléculaire moyen dans la plage allant de 200 à 3 000 g/mol.

6. Composition bicomposante selon l'une quelconque des revendications 1 à 5, **caractérisée en ce que** le composant **B** contient 5 à 30 % en poids d'eau.

7. Composition bicomposante selon l'une quelconque des revendications 1 à 6, **caractérisée en ce que** le composant **B** comprend en outre au moins une polyamine contenant au moins deux groupes amino primaires, qui n'est pas identique aux polyamines utilisées pour la fabrication de l'adduit amine-époxyde.

8. Composition bicomposante selon la revendication 7, **caractérisée en ce que** le composant **B** comprend en outre au moins un émulsifiant contenant un hydrogène d'amine.

9. Composition bicomposante selon la revendication 8, **caractérisée en ce que** l'émulsifiant contenant un hydrogène d'amine est
- un produit de réaction d'au moins un diépoxyde, d'au moins une amine grasse et d'au moins une polyoxyéthylène-diamine en un rapport molaire d'environ 1:1:1,
et/ou
- un produit de réaction d'au moins un diépoxyde, d'au moins une amine grasse et d'au moins une polyalkylène-amine en un rapport molaire d'environ 1:1:1.

10. Composition bicomposante selon l'une quelconque des revendications précédentes, **caractérisée en ce qu'**elle comprend en outre au moins un catalyseur pour la réticulation du polymère à fonction silane au moyen d'humidité.

11. Composition bicomposante selon l'une quelconque des revendications précédentes, **caractérisée en ce qu'**elle comprend en outre au moins un aminosilane ou un époxysilane ou un mercaptosilane.

12. Composition bicomposante selon l'une quelconque des revendications précédentes, **caractérisée en ce qu'**elle comprend en outre au moins une charge.

13. Composition bicomposante selon l'une quelconque des revendications précédentes, **caractérisée en ce que** le rapport en poids entre le composant **A** et le composant **B** se situe dans la plage allant de 1:1 à 50:1.

14. Utilisation d'une composition bicomposante selon l'une quelconque des revendications 1 à 13 en tant qu'adhésif, agent d'étanchéité ou revêtement.

15. Composition durcie obtenue à partir d'une composition bicomposante selon l'une quelconque des revendications 1 à 13 par mélange du composant **A** avec le composant **B.**
